# EUROPÄISCHE PATENTSCHRIFT

(11) **EP 3 130 832 B1**
(45) Veröffentlichungstag und Bekanntmachung des Hinweises auf die Patenterteilung: **22.07.2020**
(21) Anmeldenummer: 16401030.8
(22) Anmeldetag: 24.05.2016
(51) Int. Cl.: F16M 13/02, H04R 1/02, H04N 5/64

(54) **ANORDNUNG ZUM HALTEN EINES GERÄTES SOWIE VORRICHTUNG**
SYSTEM FOR HOLDING A UNIT AND DEVICE
SYSTEME DE SUPPORT D'UN APPAREIL ET DISPOSITIF

(30) Priorität: 13.08.2015 DE 102015215429
(43) Veröffentlichungstag der Anmeldung: 15.02.2017
(73) Patentinhaber: TechniSat Digital GmbH, 54550 Daun (DE)
(72) Erfinder: Dörr, Fabian, 56729 Ettringen (DE)

(56) Entgegenhaltungen:
- EP-A2- 1 617 127
- WO-A1-2007/131938
- WO-A1-2013/056025
- CN-U- 202 841 359
- JP-A- 2005 135 103
- US-A1- 2009 257 201

## Beschreibung

Die Erfindung betrifft eine Anordnung zum Halten eines Gerätes, welches im Wesentlichen mit Funktionen zur Wiedergabe von Ton und/oder Bild ausgestattet ist. Ferner betrifft die Erfindung eine Vorrichtung, die ein Teil der Anordnung ist.

Bei dem Gerät kann es sich um einen Flachbildschirm (Computerbildschirm) handeln oder um einen Flachbildschirm, in den ein TV-Empfänger integriert ist (TV-Gerät). Ferner ist auch dann ein Gerät im Sinne der Erfindung gemeint, wenn der Flachbildschirm und der TV-Empfänger als separate technische Einheiten ausgeführt sind, die elektrisch verbunden oder gekoppelt sind. Es ist allgemein ein Gerät gemeint, das zur großformatigen Bildanzeige vorgesehen ist. Solche Geräte sind zumeist auch mit Mitteln zur Tonwiedergabe wie beispielsweise Lautsprecher ausgestattet. Lautsprecher sind in vielfältigen Formen, Ausführungen und Dimensionen bekannt. Bei einem Lautsprecher handelt es sich um einen Wandler, der elektrische Signale in mechanische Schwingungen (Schall) überträgt.

Zum Halten des Gerätes ist eine Halterung vorgesehen, die hier vorrangig als Halteelement, aber auch als Halterung oder als Halter bezeichnet wird. Es sind beispielsweise Halterungen für die Geräte wie TV-Geräte und diverse Bildschirme bekannt, zum Beispiel EP 1 617 127 A2 und US 2009/257201 A1.

Derartige Halterungen können nach einem Standard der VESA (Video Electronics Standards Association) ausgeführt sein. Es sind die Begriffe VESA-Norm und VESA-Standard gebräuchlich, wobei mit dem Begriff der Norm üblicherweise eine konkrete Ausführung gemeint ist, die dem Standard entspricht. Lösungen wie Halterungen, die dem VESA-Standard entsprechen, haben breite Anwendung gefunden. Solche Halterungen lassen sich beispielsweise an einer Wand, an einer Decke befestigen oder auf einer Tischfläche aufstellen. Ein befestigter Halter kann folglich an einer Wand oder an einer Raum- oder Gebäudedecke angeschraubt sein. Ein aufgestellter Halter weist üblicherweise Aufstellfüße beispielsweise aus Kunststoff, Gummi oder Dergleichen auf. Mittels solcher Halter, Halterungen oder Halteelemente ist ein vereinfachtes Anbringen oder Aufstellen des Gerätes möglich, wobei die Fläche des Bildschirmes (Bildfläche) in jede denkbare Lage gebracht werden kann (waagerecht, senkrecht, schräg, usw.).

Viele der handelsüblichen Geräte weisen an ihrer Rückseite Gewindebohrungen auf, die nach dem VESA-Standard ausgeführt und angeordnet sind. Sofern das nicht der Fall ist, lassen sich verschiedene Adapter verwenden, die sich an den Geräten befestigen und mit einer Halterung, die nach dem VESA-Standard ausgeführt ist, verbinden lassen.

Die Halterung stellt eine trennbare mechanische Verbindung dar. Üblicherweise gehören zur Halterung die notwenigen Mittel (Schrauben, Bolzen u.ä.) als Zubehör, um die Verbindung mit Wand/Decke und die lösbare Verbindung (Befestigungsverbindungen) mit dem Gerät herzustellen. Die Gesamtheit der Befestigungsverbindungen bildet eine Befestigungsstruktur aus, die im Wesentlichen Schraubverbindungen aufweist. Zu einer hier Betracht kommenden Befestigungsstruktur gehören jeweilige Kontakt- oder Auflageflächen, die mittels der Befestigungsverbindungen (z.B. Schraubverbindung) zusammengefügt werden und somit lösbar verbunden sind.

Im VESA-Standard sind beispielsweise die Anordnung und Anzahl der Schrauben/Gewinde, die Abstände derer zueinander und die Gewindestärken festgelegt. Im Rahmen des VESA-Standards liegt eine Reihe von unterschiedlichen Ausführungen (Befestigungsformate), die jeweils eine Norm-Bezeichnung tragen. Bei der Auswahl des Befestigungsformates kann die Größe und/oder das Gewicht des Gerätes eine Rolle spielen. Es sind unter anderem die Befestigungsformate VESA 100, VESA 200, VESA 300 und VESA 400 (Normen) bekannt, wobei vier Befestigungsverbindungen in den Ecken eines gedachten Quadrates angeordnet sind. Der Abstand der Befestigungsverbindungen ist bei VESA zumeist anhand der Bezeichnung der Norm erkennbar, wobei eine Zahl den Abstand in Millimetern wiedergibt. Der Abstand beträgt beispielsweise bei VESA 100 100 mm. Die Befestigungsverbindungen bei VESA sind üblicherweise Schraubverbindungen und können folglich aus Schrauben, Gewindebohrungen und Dergleichen bestehen. Bekannte Halterungen weisen beispielsweise Elemente zum Klappen, zum Verdrehen, zum Kippen, zum Schwenken und zum Höhenverstellen auf.

Der VESA-Standard ist hier als ein Beispiel für eine Art der Halterung genannt. Grundsätzlich dient ein Halteelement dazu, den Ort des Aufstellens des Gerätes festzulegen, wobei das Gerät trennbar mit dem Halteelement verbunden werden kann.

Bei modernen Geräten und insbesondere bei modernen TV-Geräten ist die Fläche zur Bildanzeige (Bildfläche) derart großformatig ausgelegt, dass die Geräte Bilddiagonalen von über einen Meter aufweisen. Besagte Geräte können, um optisch ansprechend zu sein, flache Ausführungen aufweisen, wobei sie wenige Zentimeter dick sind. Ein Trend ist auch darin zu sehen, dass der Gehäuserand um die Bildanzeige immer schmaler gehalten wird. Es ist praktisch und üblich, flach ausgeführte Geräte an der Wand zu befestigen (Wandmontage). Derartige Geräte können bis zu 10 Kilogramm (kg) schwer sein, wobei VESA-Halterungen beispielsweise für Traglasten von max. 30 kg oder max. 95 kg ausgelegt sein können.

Neben dem optisch ansprechenden Eindruck von Bild und Gerät kommt auch der akustischen Wiedergabe des Gerätes ein erhöhter Stellenwert zu. Die akustische Wiedergabe oder Tonwiedergabe soll der Gestalt sein, dass ein Betrachter und Zuhörer in der Nähe des Gerätes ein möglichst realitätsnahes Klangerlebnis hat.

Bei den genannten Geräten kommen elektrische Tonerzeuger wie beispielsweise Lautsprecher mit Membran zum Einsatz. Bekanntermaßen lässt sich mit Lautsprechern der Ton als eine Mischung akustisch wahrnehmbarer Schwingungen erzeugen. Ton wird auch als ein Schallergebnis verstanden.

Eine diskrete Schwingung zeichnet sich durch eine Frequenz aus. Schwingungen lassen sich folglich nach Frequenzbereichen oder auch Frequenzbändern gruppieren. Sofern von akustisch wahrnehmbaren Schwingungen oder von einem wahrnehmbaren Ton die Rede ist, kommt der Frequenzbereich in Betracht, den ein Mensch hören kann. Es gibt die einfache Regel, wonach ein Mensch in Etwa in dem Frequenzbereich von 20 Hz bis 20 kHz (Hz=Hertz) hört und solche Schwingungen wahrnimmt (wahrnehmbarer Frequenzbereich). Die menschliche Wahrnehmung hängt allerdings nicht nur von den Frequenzen des Tones, sondern auch vom Schalldruck oder Schalldruckpegel ab, was zur Lautstärke adäquat ist.

Es ist ein bekanntes Problem, dass gängige oder preiswerte elektrische Tonerzeuger wie Lautsprecher nicht ohne Weiteres über den gesamten wahrnehmbaren Frequenzbereich einen Schalldruck gleicher Höhe erzeugen können und somit die wahrgenommene Lautstärke frequenzabhängigen Schwankungen unterliegt. Mit anderen Worten gewinnt der Zuhörer den Eindruck, dass er den Ton je nach Klang oder Klangfarbe unterschiedlich laut hört. Folglich könnte die akustische Wahrnehmung des Zuhörers in der Nähe des Gerätes anders sein als in der Realität. Der Zuhörer könnte den Ton sogar als störend oder als unangenehm empfinden.

Das aufgezeigt Problem - der frequenzabhängigen Schwankungen der Lautstärke - ist dann gelöst, wenn ein sogenannter Frequenzgang erreicht wird, der in Etwa linear ist. Es sind Lösungen bekannt, wonach unterschiedliche Typen oder Bauformen von Lautsprechern in einem Gerät oder in einer Lautsprecherbox zum Einsatz kommen. Ferner sind auch Lösungen bekannt, wonach eine einzelne Lautsprecherbox für die akustische Wiedergabe einer Klangfarbe, d.h. für einen festgelegten und ggf. eingeschränkten Frequenzbereich ausgelegt ist. Hierfür kann die Lautsprecherbox gezielt ausgestaltet sein. Ferner kann der bzw. können die Lautsprecher der Lautsprecherbox auf dieselbe abgestimmt und entsprechend ausgeführt sein. Ein solcher Frequenzbereich, für den ein Lautsprecher oder eine Lautsprecherbox ausgelegt ist, wird hier als Arbeitsbereich bezeichnet.

Das Auslegen einer Lautsprecherbox für einen Frequenzbereich/Arbeitsbereich besteht vereinfacht dargestellt in dem Dimensionieren und dem Ausformen des Gehäuses unter der Berücksichtigung vieler technischer Parameter des Lautsprechers oder der Lautsprecher, wobei der/die Lautsprecher dementsprechend auf die Lautsprecherbox abgestimmt ausgeführt oder ausgewählt werden müssen. Gegebenenfalls kommen hierbei dämpfende Mittel (Gewirk, Filz) zum Einsatz und es können ein oder mehrere Öffnungen in dem Gehäuse des Lautsprechers (Korpus) vorgesehen sein.

Es gibt bekannte Arbeitsbereiche, die eine Aufteilung des vom Menschen wahrnehmbaren Frequenzbereiches darstellen. Es sind unter anderem die Arbeitsbereiche Tieftonbereich (20 Hz - 100 Hz), Mitteltonbereich (100 Hz - 4 kHz) und Hochtonbereich (4 kHz - 20 kHz) bekannt. Bei Lautsprechern und Lautsprecherboxen ist analog von Tieftönern, Mitteltönern und Hochtönern die Rede. Tieftöner dienen der Wiedergabe von Bässen und werden auch als Basslautsprecher bezeichnet. In der Praxis kommt bei der Ausführung von Lautsprecherboxen den Frequenzen, die unter 60 Hz und über 12 kHz liegen, wenig Beachtung zu.

Es sind spezielle Lösungen zur Tonzeugung im Tieftonbereich bekannt. Bei der Tonzeugung im Tieftonbereich kommen große Wellenlängen in Betracht. Beispielsweise weist eine Schwingung von 80 Hz eine Wellenlänge von 4,3 m auf. Bekannt sind verschiedene Varianten von Tiefton-Lautsprechern (Tieftöner). Es gibt unter den Tieftönern spezielle Lautsprecher für Tiefbässe (der engl. Begriff "Subwoofer" ist im deutschen Sprachraum etabliert). Ein Ton, dessen Schwingungen unterhalb einer Grenze von ca. 100 Hz liegen, ist hinsichtlich seiner Quelle für den Menschen schwierig zu orten. Folglich könnte sich ein Tieftöner und insbesondere ein Tiefbass-Lautsprecher/Subwoofer zunächst ohne größere räumliche Zwänge positionieren lassen.

Bei einem Tieftöner - im Sinne einer Lautsprecherbox - ist es vorteilhaft, sofern dieser mit einem geeigneten Lautsprecher und einem an die Arbeitsfrequenz und zudem an den Lautsprecher angepassten Gehäuse ausgestaltet ist. Die Wirksamkeit eines Tieftöners hängt von einem Luftvolumen ab, das der Tieftöner in Form eines Luftstromes bewegen kann. Folglich sollte das Gehäuse/der Korpus ein Mindestvolumen aufweisen sowie ferner einen Luftströmungskanal im Gehäuse oder eine vergleichbare Öffnung zum Durchlassen des Luftstromes. Das Bewegen und Durchlassen des Luftstromes in das bzw. aus dem Gehäuse findet im Zuge der Tonerzeugung und aufgrund der dabei auftretenden Schwingungen statt.

Aus dem Stand der Technik ist bereits bekannt, dass der eingangs geschilderte Trend hin zu großflächigen und flachen Geräten die Ausgestaltung selbiger Geräte mit einem geeigneten Tieftöner erschwert, weil beispielsweise für den Volumenbedarf eines Gehäuses/Korpus des Tieftöners kein freier Einbauraum im Gehäuse des Gerätes vorhanden oder vorgesehen ist.

In der Druckschrift EP 1 529 418 B1 ist eine Lautsprecheranordnung in einem Gerät, für die Wiedergabe von stereophonen Audiosignalen, mit einem in dem Gerät angeordneten Gehäuse, einem Lautsprecher für Tieftonsignale und Lautsprechern für Mittel- und Hochtonsignale usw. gezeigt. Das demnach in dem Gerät angeordnete Lautsprechergehäuse ist allerdings so gezeigt, dass das Gehäuse des Lautsprechers in einen Standfuss oder Ständer eines TV-Gerätes integriert ist und eine von der Bildfläche abgesetzte Einheit darstellt.

Vergleichbare Lösungen sind unter anderem als Audio-Balken (auch engl. "soundbar") bekannt. Der Verwendung eines Soundbars ist bei TV-Geräten üblich oder zumindest bekannt. Nachteiligerweise hat der Betrachter/Zuhörer den Soundbar mit vor Augen, sofern er auf die Bildfläche des Gerätes schaut.

Es kann als ein Lösungsbedürfnis angesehen werden, die Tonwiedergabe eines Gerätes zu verbessern. Ferner sollte das gesuchte Mittel zur Tonwiedergabe die flache Bauform des Gerätes sowie dessen gesamten optischen Eindruck nicht beeinträchtigen, sodass ein Mittel, das im Blickfeld des Betrachters/Zuhörers liegt, nicht in Frage käme. Zudem könnte das gesuchte Mittel als optionale Erweiterung des Gerätes gedacht sein, wobei ein geringer Aufwand für einen Umbau oder ein Umrüsten des Gerätes angestrebt wird.

Sofern solche und ggf. optionale Erweiterungen des Gerätes an dessen Rückseite angebracht werden sollen, zeigt sich der Konflikt auf, dass dann die Möglichkeit zum Befestigen des Gerätes an einer VESA-Halterung verloren gehen könnte.

Es ist bekannt, dass es neben der Mitteln zur Tonwiedergabe weitere technische Elemente (Funktionselemente) mit Platz-/Raumbedarf für den Einbau in einem Gerät gibt. Das kann beispielsweise für TV- oder WLAN-Antennen zutreffen. Damit lässt sich ggf. das Senden und Empfangen von Signalen verbessern, was Infrarotverbindungen (IR) mit einschließt. Es könnte ferner notwendig sein, dass in der Nähe des Gerätes nicht nur eine akustische sondern auch eine optische Wirkung erzielt oder eine solche Funktion unterstützt werden soll.

Zur Lösung der aufgezeigten Probleme wird eine Anordnung gemäß Anspruch 1 vorgeschlagen. Die abhängigen Ansprüche stellen Ausführungsformen dar.

Gemäß einer ersten Ausgestaltung ist vorgesehen, eine Anordnung zum Halten eines Gerätes, die aufweist: das Gerät mit Funktionen insbesondere zur Wiedergabe von Ton und/oder Bild; ein Halteelement zum Koppeln und Fixieren der Lage des Gerätes an einem Ort;
ein Distanzelement zum Anordnen zwischen dem Gerät und dem Halteelement sowie
ein Funktionselement zum Unterstützen mindestens einer Funktion des Gerätes. Hierzu sind zum Halten des Gerätes das Gerät mit dem Distanzelement und das Distanzelement mit dem Halteelement mechanisch gekoppelt. Ferner ist zum Halten des Funktionselementes das Funktionselement mit dem Distanzelement mechanisch gekoppelt. Weiterhin ist zum Unterstützen mindestens einer Funktion des Gerätes das Funktionselement mit dem Gerät funktional gekoppelt.

Gemäß einer Ausführungsform ist die Anordnung vorgesehen, wobei das Distanzelement derart ausgeführt und gekoppelt ist, dass es die Kraft zum Halten des Gerätes zwischen dem Gerät und dem Halteelement überträgt, wobei das Distanzelement derart ausgeführt ist, dass das Gerät in einer Distanz zum Halteelement angeordnet ist, wobei das Distanzelement einen Innenraum aufweist und/oder ausbildet, in dem das Funktionselement vollständig oder zumindest anteilig angeordnet ist.

Gemäß einer Ausführungsform ist die Anordnung vorgesehen, wobei das Funktionselement zur Wiedergabe von Ton ausgebildet ist, wobei das Funktionselement einen Korpus, mindestens einen ersten Tonerzeuger sowie einen elektrischen Anschluss zum Versorgen des ersten Tonerzeugers aufweist und wobei der Korpus mindestens eine Öffnung zum Abgeben des Tones aufweist.

Gemäß einer Ausführungsform ist die Anordnung vorgesehen, wobei der Korpus und/oder der erste Tonerzeuger zur Wiedergabe von Ton mit einer Tonfrequenz, die in einem ersten Frequenzbereich liegt, ausgelegt sind/ist und wobei der elektrische Anschluss zum Versorgen des ersten Tonerzeugers mit dem Gerät funktional gekoppelt ist.

Gemäß einer Ausführungsform ist die Anordnung vorgesehen, wobei das Gerät mindestens einen zweiten Tonerzeuger aufweist, der zur Wiedergabe von Ton mit einer Tonfrequenz, die in einem zweiten Frequenzbereich liegt, ausgelegt ist.

Gemäß einer Ausführungsform ist die Anordnung vorgesehen, wobei das Gerät mindestens eine Frequenzweiche aufweist, die an einem ersten Ausgang zum Bereitstellen eines ersten Audiosignals zum Erzeugen von Ton aus einem ersten Frequenzbereich und die an einem zweiten Ausgang zum Bereitstellen eines zweiten Audiosignals zum Erzeugen von Ton aus einem zweiten Frequenzbereich eingerichtet ist und wobei der erste Tonerzeuger zur Wiedergabe von Ton mit einer Tonfrequenz, die in einem ersten Frequenzbereich liegt, über den elektrischen Anschluss mit dem ersten Ausgang und der zweite Tonerzeuger zur Wiedergabe von Ton mit einer Tonfrequenz, die in einem zweiten Frequenzbereich liegt, mit dem zweiten Ausgang gekoppelt ist.

Gemäß einer Ausführungsform ist die Anordnung vorgesehen, wobei die Anordnung Befestigungsstrukturen zum mechanischen Koppeln aufweist, wobei eine Befestigungsstruktur mehrere Befestigungsverbindungen aufweist und gemäß der Lage- und Abstandsbeziehung der Befestigungsverbindungen die Befestigungsstruktur in einem standardisierten Befestigungsformat von mehreren Befestigungsformaten ausgeführt ist, wobei das Gerät, das Distanzelement und das Halteelement jeweils eine erste Befestigungsstruktur aufweisen und mittels derer miteinander mechanisch gekoppelt sind und wobei die jeweilige erste Befestigungsstruktur in einem ersten Befestigungsformat ausgeführt ist.

Gemäß einer Ausführungsform ist die Anordnung vorgesehen, wobei das Funktionselement und das Distanzelement jeweils eine zweite Befestigungsstruktur aufweisen und mittels derer miteinander gekoppelt sind, wobei die jeweilige zweite Befestigungsstruktur entweder in dem ersten Befestigungsformat ausgeführt ist oder in einem zweiten Befestigungsformat, das ungleich dem ersten Befestigungsformat ist, ausgeführt ist.

Gemäß einer weiteren Ausgestaltung ist vorgesehen, eine Vorrichtung zum Anordnen in einer Kopplung zwischen einem Gerät mit Funktionen insbesondere zur Wiedergabe von Ton und/oder Bild und einem Halteelement zum Koppeln und Fixieren der Lage des Gerätes an einem Ort, wobei die Vorrichtung bereitgestellt ist, um mindestens ein Funktionselement zum Unterstützen mindestens einer Funktion des Gerätes zu halten und/oder zu befestigen. Gemäß einer Ausführungsform ist die Vorrichtung vorgesehen, wobei die Vorrichtung ein Distanzelement gemäß der aufgezeigten Anordnung aufweist.

Gemäß einer Ausführungsform weist die Vorrichtung zum mechanischen Koppeln ein Distanzelement auf, das zum Befestigen an einer ersten Aufnahme eines Gerätes und zum Bereitstellen einer zweiten Aufnahme für eine Halterung ausgebildet ist,
wobei das Distanzelement die zweite Aufnahme aufweist.

Gemäß einer Ausführungsform der Vorrichtung ist das Distanzelement
für Befestigungsverbindungen in einem Befestigungsformat zum Befestigen an einer ersten Aufnahme eines Gerätes und für Befestigungsverbindungen in einem Befestigungsformat zum Bereitstellen der zweiten Aufnahme für eine Halterung ausgebildet.

Gemäß einer Ausführungsform der Vorrichtung ist das erste Befestigungsformat und/oder ist das zweite Befestigungsformat nach einem Standard und vorzugsweise gemäß dem VESA-Standard ausgestaltet.

Gemäß einer Ausführungsform der Vorrichtung gleicht das erste Befestigungsformat dem zweiten Befestigungsformat.

Gemäß einer Ausführungsform der Vorrichtung ist das Distanzelement zum mechanischen Koppeln derart ausgeführt, dass das Distanzelement eine Kopplung für ein Funktionselement aufweist.

Gemäß einer Ausführungsform der Vorrichtung weist die Vorrichtung das Funktionselement auf. Gemäß einer Ausführungsform der Vorrichtung weist die Vorrichtung das Gerät auf.

Gemäß einer Ausführungsform der Vorrichtung ist das Distanzelement für Befestigungsverbindungen ausgebildet, die als Schraubverbindungen ausgeführt sind. Nachfolgend wird die Erfindung anhand von Ausführungsbeispielen und zugehörigen Zeichnungen erläutert. Hierzu zeigen:
- Fig. 1: Anordnung in einer schematischen Darstellung
- Fig. 2A: Anordnung für VESA 300/400 - expandiert
- Fig. 2B: Anordnung für VESA 300/400 - zusammengefügt
- Fig. 3A: Anordnung für VESA 200 - expandiert
- Fig. 3B: Anordnung für VESA 200 - zusammengefügt
- Fig. 4: Lautsprecherbox und Befestigungsmittel - expandiert
- Fig. 5: Vorrichtung mit Gerät in einer schematischen Darstellung

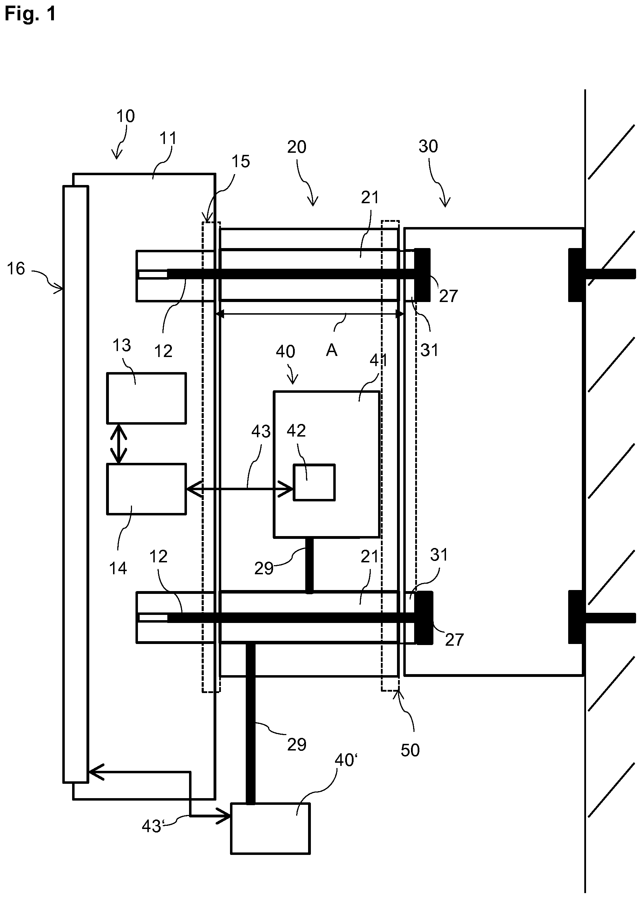

Mit der **Fig. 1** soll die Anordnung anhand einer schematischen Darstellung in einer vereinfachten Form gezeigt werden. Die Anordnung weist das Gerät 10, das Distanzelement 20 sowie das Halteelement 30 auf. Das Halteelement 30 ist an einer Wand montiert. Das Halteelement 30 hält das Distanzelement 20 sowie das Gerät 10 beispielsweise mittels der Lochplatte 31, der Distanzhülse 21 und der Gewindehülse, in deren Gewindebohrung 12 der Gewindebolzen 27 eingeschraubt ist, wobei der Gewindebolzen 27 die aufgezählten Teile miteinander verbindet und somit das Gerät 10, das Distanzelement 20 sowie das Halteelement 30 mechanisch koppelt.

An der Distanzhülse 21 ist jeweils mittels einer zusätzlichen mechanischen Kopplung 29 das Funktionselement 40 befestigt sowie ein zusätzliches Funktionselement 40'. Das Funktionselement 40 weist einen Korpus 41 sowie einen ersten Tonerzeuger 42 auf, der beispielsweise die Funktion der Tonwiedergabe des Gerätes 10 unterstützt. Zur Tonwiedergabe sind in das Gerät 10 eine Frequenzweiche 14 sowie ein zweiter Tonerzeuger 13 integriert. Zur Unterstützung der Tonwiedergabe ist der erste Tonerzeuger 42 über den elektrischen Anschluss 43 mit der Frequenzweiche 14 des Gerätes 10 funktional gekoppelt.

Das Gerät 10 könnte ein TV-Gerät sein mit Funktionen zur Wiedergabe von Bild und Ton. Es ist vorgesehen, dass das empfangene Tonsignal oder Audiosignal an die Frequenzweiche 14 übertragen wird (Eingang). Die Frequenzweiche ist eingerichtet, um das dieses Audiosignal aufzuteilen oder zu trennen in einen ersten Frequenzbereich (erster Ausgang; für den ersten Tonerzeuger) und in einen zweiten Frequenzbereich (zweiter Ausgang; für den zweiten Tonerzeuger). Es lassen diese Frequenzbereiche aufzeigen oder eine solche Grenzfrequenz, bei der die Frequenzweiche 14 zwischen dem ersten und dem zweiten Frequenzbereich trennt. Eine solche Grenzfrequenz könnte beispielsweise bei einem Wert zwischen 150 Hz und 300 Hz und vorzugsweise zwischen 200 Hz und 250 Hz liegen. Demnach käme beispielsweise ein erster Frequenzbereich mit 60 Hz bis 220 Hz und ein zweiter Frequenzbereich mit 220 Hz bis 10 kHz in Betracht, wobei die Werte im Rahmen einer Toleranz von (plus/minus) 10, 20 und 40 Hz zu sehen sind. Folglich wäre der erste Tonerzeuger 42 für das Erzeugen von Bass- und unteren Mitteltönen vorgesehen (hier Tieftöner) und der zweite Tonerzeuger 13 für das Erzeugen von den übrigen mittleren und den hohen Tönen (Mitteltöner/Hochtöner). Dieses ist hinsichtlich der Anzahl der Frequenzbereiche, der Grenzfrequenz(en) und der Zuordnung der Frequenzbereiche zu Tonerzeugern zunächst variabel, wobei auch der zweite Tonerzeuger 13 außerhalb des Gerätes angeordnet sein kann.

Das Gerät 10 ist ferner mit mindestens einem Mittel zur Bildwiedergabe ausgeführt und weist eine Bildfläche 16 auf. Das Mittel zur Bildwiedergabe ist über einen zusätzlichen elektrischen Anschluss 43' mit dem zusätzlichen Funktionselement 40' funktional gekoppelt. Das zusätzliche Funktionselement 40' könnte beispielsweise zur Unterstützung der Bildwiedergabe des Gerätes vorgesehen sein.

Das Gerät 10 ist in einer Distanz zu dem Halteelement 30 angeordnet. Diese Distanz ist durch einen Abstand A gebildet, der mit einem Pfeil zwischen einer ersten Aufnahme 15 des Gerätes 10 und der Lochplatte 31 der Halterung 30 angedeutet ist.

An dem Distanzelement 20 ist eine zweite Aufnahme 50 bereitgestellt, an der die Lochplatte 31 der Halterung 30 befestigt ist oder befestigt werden kann. Die erste Aufnahme 15 ist an dem Gerät 10 bereitgestellt, wobei es zusätzliche Aufnahmen an dem Gerät 10 geben kann. Mit anderen Worten ist ein Ersatz für die erste Aufnahme 15 geschaffen, weil das Distanzelement 20 zwar die erste Aufnahme 15 verwendet, aber auch die zweite Aufnahme 50 bereitstellt. Die zweite Aufnahme 50 ist im Abstand A zu der ersten Aufnahme 15 angeordnet. Es ist zunächst nicht von Bedeutung, ob die Halterung 30 vorhanden ist oder nicht. Vorteilhaft ist, dass die zweite Aufnahme 50 zum Befestigen einer Halterung 30 bereitgestellt ist, wobei ferner das Funktionselement 40 gehalten und untergebracht ist.

Es ist üblich, dass die erste Aufnahme 15 für ein standardisiertes Befestigungsformat vorgesehen ist. Es bietet sich an, dass auch die zweite Aufnahme 50 für ein standardisiertes Befestigungsformat bereitgestellt ist. In dem gezeigten Beispiel sind die Befestigungsformate der ersten Aufnahme 15 und der zweiten Aufnahme 50 gleich. Es ist allerdings nicht zwingend, dass Befestigungsformate und dass gleiche Befestigungsformate zur Anwendung kommen.

Die Befestigungsformate sind vorgesehen um Befestigungsstrukturen hinsichtlich ihrer Gleichheit zu charakterisieren. Einer Befestigungsstruktur weist die Befestigungsverbindungen auf, mit denen sich ein beliebiger Gegenstand an der ersten Aufnahme 15 oder an der zweiten Aufnahme 50 befestigen lässt. Hierzu ist die Gleichheit des Befestigungsformates an der Aufnahme und an dem zu befestigenden Gegenstand von enormem Vorteil. Mithin lassen sich beispielsweise eine Halterung 30 mit der ersten Aufnahme 15 oder mit der zweiten Aufnahme 50 je nach Bedarf verbinden. Vorzugsweise ist das Distanzelement 20 mit der ersten Aufnahme 15 und bei Bedarf die Halterung 30 mit der zweiten Aufnahme 50 zu koppeln.

Mit der Lage- und Abstandsbeziehung der Befestigungsverbindungen zueinander ist das Befestigungsformat definiert, wobei es beispielsweise auf die Anordnung der Gewindebohrungen 12 in der ersten Aufnahme 15 und/oder auf die Anordnung vergleichbarer Bohrungen/Gewinde in der zweiten Aufnahme 50 des Distanzelementes 20 oder auf die Anordnung der Bohrungen 32 in der Lochplatte 31 der Halterung 30 ankommt. Da es sich regelmäßig um Schraubverbinden handelt, lassen sich auch die Schraubachsen zur Bewertung eines Befestigungsformates hinzuziehen.

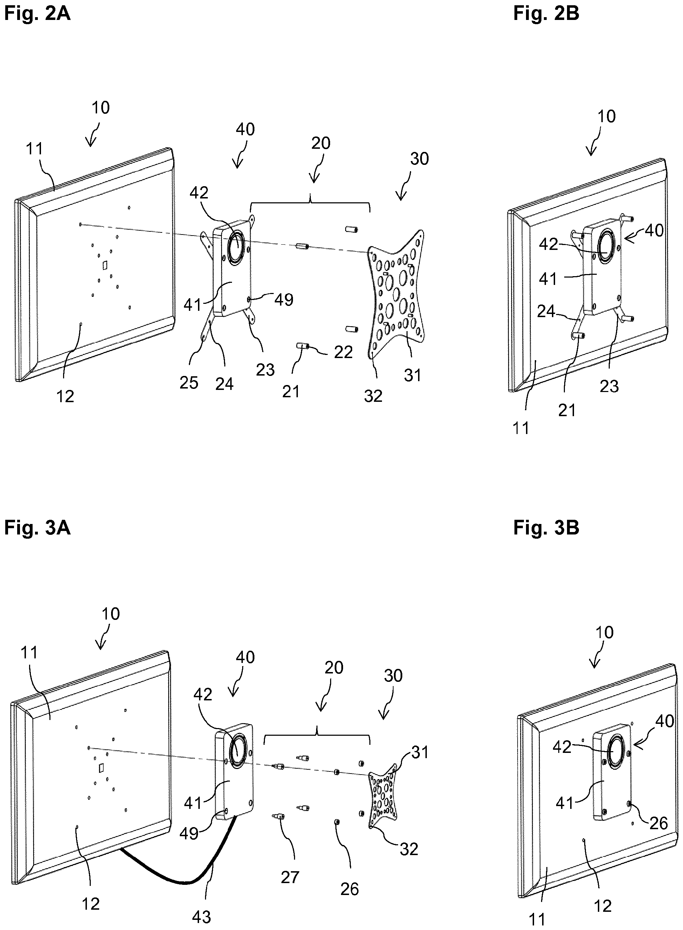

In der **Fig. 2A** ist das Gerät 10, das Distanzelement 20, das Halteelement 30 und eine Lautsprecherbox als Funktionselement 40 gezeigt. Bei dem Gerät 10, dessen Rückseite zu sehen ist, kann es sich um ein TV-Gerät oder um einen Computerbildschirm handeln. Das TV-Gerät weist ein Gehäuse 11 auf, das aus Kunststoff gefertigt sein kann. Es ist vorgesehen, dass das Gerät 10 mindestens die erste Aufnahme 15 zum Befestigen einer VESA-Halterung aufweist. Die Aufnahme 15 kann außen an dem Gehäuse ausgebildet sein. Es ist ferner möglich, dass die Aufnahme 15 anteilig oder vollständig von dem Gehäuse 11 überdeckt wird. Die mindestens eine Aufnahme 15 des Gerätes 10 weist Gewindebohrungen 12 auf, wobei es üblich ist, dass hierfür Gewindehülsen (z.B. M4, M5, M6) in/an dem Gerät 10 befestigt sind und dass die Gewindehülsen mit Gewindebohrungen 12 versehen sind. Anstatt der Gewindehülsen können Winkel an die Rückseite des Gerätes montiert sein, die gleichermaßen eine Gewindebohrungen 12 aufweisen.

Die Gewindebohrungen 12 der ersten Aufnahme 15 sind so angeordnet, dass zunächst unmittelbar an der Rückseite des Gerätes 10 und mithin an der Aufnahme 15 ein Halteelement 30 befestigt werden kann. Für das Befestigen weist das Gerät 10 mindestens eine Aufnahme 15 mit einer Befestigungsstruktur auf, die mit der Befestigungsstruktur des Halteelementes 30 hinsichtlich des Befestigungsformates übereinstimmt (z.B. gleiche VESA-Norm). In der gezeigten Darstellung kommt eine erste Befestigungsstruktur mit einem ersten

Befestigungsformat gemäß VESA 400 zur Anwendungen. Weitere Gewindebohrungen (für zusätzliche Aufnahmen) sind an dem Gerät 10 für eine Befestigung eines Halteelementes mittels einer Befestigungsstruktur mit einem zweiten Befestigungsformat gemäß VESA 100 oder VESA 200 bereitgestellt.

Das Distanzelement 20, das in einer ersten Ausführung gezeigt ist, weist Distanzhülsen 21 mit einer Bohrung 22 auf (auch Loch, Durchbruch) sowie Streifen 23 mit Bohrungen 24 und 25. Die Streifen 23 können verschieden derart ausgeführt sein, dass diese insgesamt als zwei oder vier Teilen vorliegen. Das Halteelement 30 (auch Halterung) ist mit der gezeigten Lochplatte 31 lediglich anteilig dargestellt. Die Lochplatte 31 stellt den Teil eines beliebigen Halteelementes 30 dar, der für das Befestigen am Gerät 10 zu verwenden ist. Zu einer handelsüblichen Halterung 30 gehören Befestigungsmittel wie Schrauben (Zubehör; nicht dargestellt). Es ist vorgesehen, dass das Distanzelement 20 zwischen der ersten Aufnahme 15 des Gerätes 10 und der Lochplatte 31 des Halteelementes 30 positioniert wird und dass das Gerät 10, das Distanzelement 20 und das Halteelement 30 unter Verwendung der Befestigungsmittel miteinander verbunden werden. Die Verbindung ist aufgrund der Befestigungsmittel (Schrauben) lösbar. Im Zuge des Verbindens wird an vier Befestigungsverbindungen - an den vorgesehenen Befestigungsstellen-jeweils eine Schraube (von rechts) durch die Lochplatte 31, durch die Bohrung 22 der Distanzhülse 21 und durch die Bohrung 25 des Streifens 23 und in die Gewindebohrung 12 der ersten Aufnahme 15 des Gerätes 10 gesteckt und dort hineingeschraubt. Bildhaft gesprochen lassen sich die genannten Teile entlang der Strich-Strich-Linie zusammenfügen.

Sofern die Verschraubungen der vier Befestigungsverbindungen festgezogen sind, liegen die Streifen 23 an der Aufnahme 15 und ggf. an dem Gehäuse 11 des Gerätes 10 an (wie in Fig. 2B gezeigt). Ferner ist die Lochplatte 31 des Halteelementes 30 mittels der Befestigungsverbindungen und der Distanzhülsen 21 derart befestigt, dass die Kraft zum Halten des Gerätes, über das Distanzelement 20 an das Halteelement übertragen wird. Es bietet sich an, dass die Distanzhülsen 21 und die Streifen 23 aus Metall bestehen, wobei auch Kunststoff oder ein Faserverbundwerkstoff in Frage kommt.

Das Funktionselement 40, das als Lautsprecherbox ausgeführt ist, übernimmt hingegen keine kraftübertragende Funktion sondern eine solche technische Funktion, mit der mindestens eine technische Funktion des Gerätes 10 unterstützt wird. Dahinter steht die Überlegung, dass sich mit Hilfe des oder an dem Distanzelement 20 solche technischen Mittel, Komponenten oder Elemente anbringen lassen, die nicht stabil genug sind oder gemäß ihrer Wirkungsweise besser außerhalb des Gerätes anzuordnen oder als optionales Bauteil anzuwenden sind.

Das Funktionselement 40 weist in der Gestalt einer Lautsprecherbox 40 eine gewisse Größe auf (z.B. 4 x 25 x 35) und soll Luftströmung im Raum verursachen, da die Lautsprecherbox 40 als Subwoofer ausgelegt ist. Ferner kann es sein, dass die Lautsprecherbox 40 die Tonwiedergabe des Fernsehers im vollen Umfang übernimmt (gesamter Frequenzbereich; Hoch-, Mittel und Tiefton). Indem gesagt ist, dass das Funktionselement 40 mindestens eine Funktion übernimmt, ist gemeint, dass das Funktionselement 40 zwei und mehr technische Mittel aufweisen kann oder mehrteilig ggf. so ausgeführt ist, dass das Funktionselement 40 beispielsweise aus zwei oder mehreren Lautsprecherboxen gebildet ist.

Die Lautsprecherbox könnte beispielsweise aus Kunststoff gefertigt sein und daher nur gering mechanisch belastbar sein. Bei einer Lautsprecherbox und insbesondere bei einem Tieftöner (z.B. Subwoofer) ist im Zuge der Tonerzeugung mit Vibrationen zu rechnen, sodass eine solche Lautsprecherbox vorteilhafterweise schwimmend oder gedämpft gelagert sein sollte. Auf diesbezügliche Ausführungsformen wird nachfolgend noch genauer eingegangen.

Das Funktionselement 40 kann ferner als TV- oder WLAN-Antenne/Empfänger ausgeführt sein oder Derartiges aufweisen, wobei es den TV-Empfang bzw. eine Funkverbindung (z.B. Internet, externe Boxen, Voice-over-IP, SAT-over-IP, DAB uvm.) unterstützt. Es ist denkbar, einen IR-Empfänger und ggf. einen IR-Reflektor zu integrieren, womit sich die Funktion der Fernbedienung unterstützen ließe. Letzteres könnte vorteilhaft sein, sofern das Gerät keinen frontseitigen Rahmen für den Einbau eines IR-Empfängers aufweist oder sofern sich das Gerät an einer Position im Raum befindet, die für die Fernbedienung schlecht erreichbar ist. Das Funktionselement 40 könnte ferner eine Lichtquelle aufweisen, die beispielweise dann gedimmt wird, wenn am Gerät 10 die Bildwiedergabe eingeschaltet wird und umgekehrt. Es kann sich beim Funktionselement 40 auch um ein Mittel zur Kühlung des Gerätes handeln. Es ist aus Geräuschgründen üblich, auf Lüfter zu verzichten (ausschließlich mittels Konvektion), wodurch die Kühlkapazitäten für die Elektronik des Gerätes begrenzt sind.

In der **Fig. 2B** ist gezeigt, wie das Gerät 10, das Distanzelement 20 und das Funktionselement 40 angeordnet sein können, sofern die Anordnung aus Fig. 2A zusammengefügt ist. Das Halteelement 30 ist aus Gründen der Darstellung nicht gezeigt. Mithin ist es leichter erkennbar, dass die Streifen 23 an dem Gehäuse 11 des Gerätes 10 anliegen und dabei die Gewindebohrungen 12 der ersten Aufnahme 15 und die der zusätzlichen Aufnahmen, die an dem Gerät 10 bereitgestellt sind, überdecken. Die Bohrung 24, die für eine VESA 300 Halterung (zusätzliche Aufnahme) angedacht ist, sieht vor, dass die

Distanzhülsen 21 an diesen Bohrungen 24 (innen) angeordnet werden können. In der gezeigten Darstellung befinden sich die Distanzhülsen 21 an den Bohrungen 25 (außen), sodass in dem Fall eine VESA 400 Halterung (erste Aufnahme) zum Einsatz kommen kann. Sofern hier von irgendeiner einzelnen Bohrung wie 12, 22, 24, 25 und 32 sowie von einer einzelnen Befestigungsverbindung die Rede ist, so gehören gemäß VESA beispielsweise vier davon zu einer Befestigungsstruktur.

In den Fig. 2A und 2B sind die Befestigungsmittel so angeordnet, dass das Gerät 10, das Distanzelement 20 und das Halteelement 30 in einem ersten Befestigungsformat miteinander verbunden sind (nämlich VESA 400). Ferner ist das Funktionselement 40 in einem zweiten Befestigungsformat (nämlich VESA 200) an dem Distanzelement 20 befestigt, d.h. mit diesem gekoppelt oder mit diesem verbunden.

Mit anderen Worten sind das Distanzelement 20 mit der Halterung 30 über die Gewindebohrungen 12 der ersten Aufnahme 15 (erstes Befestigungsformat, erste Befestigungsstruktur) und das Funktionselement 40 mit dem Streifen 23 des Distanzelementes 20 verbunden, wozu das Distanzelement 20 eine weitere Aufnahme aufweist (zweites Befestigungsformat, zweite Befestigungsstruktur). Anstatt diese weitere Aufnahme ließe sich vom Lösungsgedanken abweichend eine der zusätzlichen Aufnahmen des Gerätes 10 verwenden, um das Funktionselement 40 direkt an dem Gerät 10 befestigen.

Gezeigt ist in der **Fig. 3A****,** wie das Gerät 10, das Distanzelement 20 und das Halteelement 30 in einem ersten Befestigungsformat (nämlich VESA 200) miteinander verbunden sind, wobei das Funktionselement 40 gleichermaßen in diesem ersten Befestigungsformat mit dem Distanzelement 20 gekoppelt ist. Die mechanische Kopplung des Funktionselementes 40 mit dem Distanzelement 20 ist in den (z.B. vier) Gewindebolzen 27 zu sehen, die sowohl zum Halten des Gerätes 10 insbesondere als auch zum Halten des Funktionselementes 40 beitragen. Hierzu passend ist auch die Lochplatte 31 des Halteelementes 30 in dem ersten Befestigungsformat (VESA 200) ausgeführt. Das Distanzelement 20 ist so gestaltet, dass es anstatt der Streifen und Hülsen
(gem. Fig. 2A u. 2B) Distanzringe 26 und Gewindebolzen 27 aufweist. Es bietet sich auch hier an, dass Distanzringe 26 und Gewindebolzen 27 aus Metall gefertigt sind. Es sind nicht dargestellte Schrauben vorgesehen, die durch die Lochplatte 31 und durch die Distanzringe 26 gesteckt und mit den Gewindebolzen 27 verschraubt werden. Hierfür weisen die Gewindebolzen 27 jeweils an dem ersten Ende ein Außengewinde und an dem zweiten Ende ein Innengewinde auf. Es bietet sich an, dass die Gewindebolzen 27 gleich Innen- und Außengewinde in dem Maß aufweisen, wie sie für die Halterung It. VESA vorgesehen sind (betrifft metrisches Gewindemaß; z.B. M5). Die Schraube wird folglich mit dem zweiten Ende des Gewindebolzens 27 verschraubt, wobei das erste Ende des Gewindebolzens 27 in die Gewindebohrung 12 der ersten Aufnahme 15 des Gerätes 10 geschraubt wird. Die in die Befestigung/Verschraubung eingebrachte Kraft wirkt auf das Funktionselement 40 insofern nicht oder nur geringfügig, da die Gewindebolzens 27 so ausgeführt sind, dass sich selbige nur bis zu einem Anschlag in der Gewindebohrung 12 eindrehen lassen, wobei der Gewindebolzen 27 das Funktionselement 40 nicht kontaktiert.

Beispielhaft ist dargestellt, dass das Gerät 10 über den elektrischen Anschluss 43 mit dem Funktionselement 40 funktional verbunden oder gekoppelt ist.

In der **Fig. 3B** ist gezeigt, wie das Gerät 10, das Distanzelement 20 und das Funktionselement 40 angeordnet sind, sodann die Anordnung aus Fig. 3A zusammengefügt ist. Das Halteelement 30 ist aus Gründen der Darstellung nicht gezeigt. Es sind von dem Distanzelement 20 lediglich die Distanzringe 26 erkennbar, was allerdings zeigt, dass die Lochplatte 31 nicht unmittelbar an dem Funktionselement 40 anliegen würde, sondern zwischen beiden ein Spalt vorgesehen ist.

Der Begriff der Distanz - bzgl. Distanzelement 20 -, in der das Gerät 10 zu dem Halteelement 30 angeordnet ist, ist hier so zu verstehen, dass diese Distanz durch einen Abstand A, der zwischen der ersten Aufnahme 15 des Gerätes 10 und der Lochplatte 31 der Halterung 30 messbar ist, festgelegt ist. Dieser Abstand ist in einer herkömmlichen Befestigung der Halterung 30 an der ersten Aufnahme 15 des Gerätes 10 grundsätzlich nicht vorhanden und beträgt mithin Null. Der Abstand A ist beispielsweise zwischen der Gewindebohrung 12 der ersten Aufnahme 15 und der Bohrung 32 des Halteelementes 30 ausgebildet, wobei es um den Abstand solcher Auflageflächen geht, die beim Verbinden/Koppeln von Gerät 10 und Halterung 30 zusammengefügt/-gepresst werden (Kraftschluss). Die erste Aufnahme 15 ist an dem Gerät 10 bereitgestellt und durch die Auflageflächen an den Gewindebohrung 12 gebildet. Die Auflagefläche der Halterung 30 ist die, die zum Koppeln mit der zweiten Aufnahme 50 vorgesehen ist. Die zweite Aufnahme 50 ist durch die Auflageflächen an den Distanzhülsen 21 bereitgestellt.

Der Abstand A kann zum Beispiel durch eine Materialstärke (Blechdicke) festgelegt sein und wenige Millimeter (mehr als 2 mm) betragen. Das Distanzelement 20 könnte folglich eine Platte sein, die zwischen der ersten Aufnahme 15 des Geräts 10 und Halterung 30 eingelegt wird, wobei das
Funktionselement 40 mit der Platte 20 mechanisch gekoppelt ist. Demnach könnte das Funktionselement 40 nicht unmittelbar zwischen dem Gerät 10 und Halterung 30 angeordnet sein, sondern seitlich versetzt. Folglich könnte das Funktionselement 40 einige Zentimeter aber auch ein, zwei oder drei Meter entfernt von der Halterung 30 und entfernt von der ersten Aufnahme 15 oder entfernt von dem Gerät 10 positioniert sein, wobei das Funktionselement 40 zum Positionieren mindestens eine zusätzliche mechanische Kopplung 29 aufweisen kann. In einem solchen Fall ist das Befestigungsformat nicht relevant.

Es ist ein weiterer Gedanke, dass der Abstand A so bemessen sein kann, dass sich das Funktionselement 40 vollständig und/oder anteilig zwischen dem Gerät 10 (der ersten Aufnahme 15) und der Halterung 30 (der Lochplatte 31) anordnen lässt. In dem Fall spielt die Form und Größe des Funktionselementes 40 zunehmend eine Rolle, aber auch die Funktion oder Funktionen, die das Funktionselement 40 übernimmt. Folglich könnte der Abstand ein, zwei, drei oder mehrere Zentimeter groß sein, wobei bis zu zwanzig Zentimeter noch sinnvoll erscheinen. Vorzugsweise ist in der Anordnung ein Abstand von zwei bis fünf Zentimeter ausgebildet.

Bezüglich eines Innenraumes, in dem das Funktionselement 40 vollständig und/oder anteilig angeordnet sein kann, ist vorgesehen, dass dieser Innenraum beispielsweise durch zwei gegenüberliegende Flächen begrenzt ist, nämlich durch das Gehäuse 11 des Gerätes 10 und durch die Lochplatte 31 der Halterung 30. Der Innenraum könnte ferner so gestaltet sein, dass dieser die Lochplatte 31 überragt, aber nicht das Gerät 10, wobei deren (in der Blickrichtung des Betrachters gedachte) Projektionsflächen den Innenraum begrenzen.

Es kann vorgehen sein, dass das Distanzelement 20 oder Teile davon (z.B. die Gewindebolzen 27) in dem Funktionselement 40 angeordnet oder durch das Funktionselement 40 hindurch geführt sind.

Zu den bereits erläuterten Zeichnungen und Ausführungsformen soll noch gesagt sein, wie das Funktionselement 40 an dem Distanzelement 20 befestigt oder mit diesem gekoppelt werden kann. Bei der Ausgestaltung der Kopplung, Verbindung oder Lagerung des Funktionselementes 40 ist die beabsichtigte Funktion des Gerätes 10 in Betracht zu ziehen, die das Funktionselement 40 unterstützt. Nach den vorgeschlagenen Funktionen kann es relevant sein, dass eine Kopplung thermisch und/oder elektrisch isolierend wirkt. In dem gezeigten Beispiel, in dem das Funktionselement 40 als Tieftöner (ggf. Subwoofer) ausgeführt ist, bietet sich eine Kopplung an, die als gedämpfte oder schwimmende Lagerung ausgeführt ist. Die Lagerung weist beispielsweise dämpfende Elemente und solche, die durch Formschluss das Funktionselement 40 am Verrutschen hindern, auf.

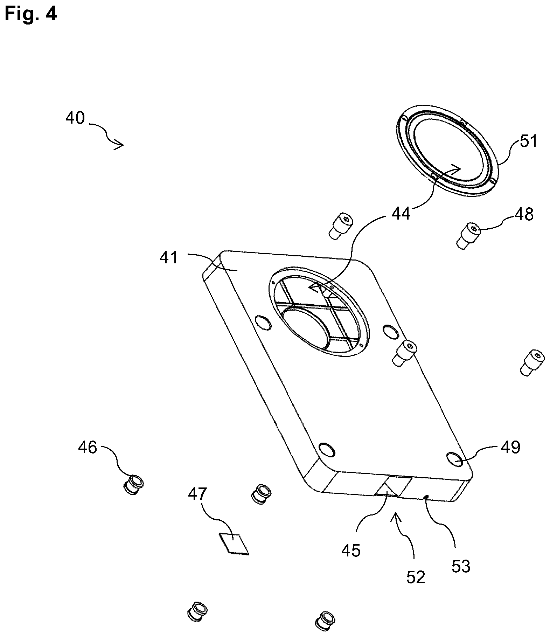

In der **Fig. 4** ist anhand einer Lautsprecherbox 40 gezeigt, dass vier Gummihülsen 46 und zumindest ein Gummistreifen 47 als dämpfende Elemente zum Einsatz kommen können, die an einem Korpus 41 angelegt oder befestigt werden. Zum Befestigen des Korpus 41 sind zunächst Kopfbolzen 28 vorgesehen. Ein Kopfbolzen 28 ist anteilig wie ein Gewindebolzen 27 (vgl. Fig. 3B) ausgeführt. Die Ausführung des Kopfbolzens 28 ist der Gestalt, dass der eingeschraubte Kopfbolzen 28 eine umlaufende Vertiefung (Nut) ausbildet. Es ist vorgesehen, dass an einem in ein Loch 49 des Korpus 41 eingeschraubten Kopfbolzen 28 rund um den Kopfbolzen 28 ein Spalt ausgebildet ist, der durch eine der Gummihülsen 46 ausgefüllt wird. Die Gummihülse 46 ist an beiden Enden mit Kragen so versehen, dass die Gummihülse 46 in einem Loch 49 des Korpus 41 festgeklemmt ist. Die umlaufende Vertiefung des Kopfbolzens 28 ist derart ausgeführt, dass die Gummihülse 46 nach dem Verschrauben des Kopfbolzens 28 in die umlaufende Vertiefung eingebettet, an den Kragen gehalten und somit gegen axiales Verrutschen gesichert ist. Mithin ist auch das Funktionselement 40 in seiner Lage fixiert. Es kann ferner vorgesehen sein, dass die Kragen der Gummihülse 46 außerhalb der beiden Enden des Loches 49 angeordnet sind. Ferner lässt sich mittels einer Erhöhung (umlaufender Ring; Feder zur Nut) innerhalb des Loches 49 die Gummihülse 46 so anordnen, dass beide Kragen oder nur ein Kragen der Gummihülse 46 innerhalb der beiden Enden des Loches 49 angeordnet sind bzw. ist. Mit anderen Worten weist ein Längsschnitt der Gummihülse 46 mindestens eine radial ausgerichtete Vertiefung und/oder Erhebung auf.

Der mindestens eine Gummistreifen 47 kann aus sog. Moosgummi bestehen, wobei als Material auch ein flexibles Elastomer (porös, schaum-/schwammartig) zum Einsatz kommen kann. Die Gummihülsen 46 können aus einem gleichen oder aus einem ähnlichen Material oder aus Gummi gefertigt sein.

Eine solche Lagerung bietet sich beispielsweise an, sofern das Funktionselement 40 schwingt oder schwingen kann. Von solchen Schwingungen ist bei einem Lautsprecher, einer Lautsprecherbox und insbesondere bei einem Tieftöner (z.B. Subwoofer) auszugehen. Mit der gezeigten Lagerung lassen sich Störgeräusche verhindern. Es wird nämlich verhindert, dass das Funktionselement 40 den Halter 30 oder das Distanzelement 20 oder das Gerät 10 berührt/kontaktiert. Von dem Funktionselement 40 könnte zudem Schwingungen oder sonstige Vibrationen ausgehen, wenn das Funktionselement 40 beispielsweise einen Motor (Lüfter, Pumpe) aufweist. Das Distanzelement 30 kann zudem so ausgebildet sein, dass mittels der Lagerung nicht nur ein Dämpfen/Entkoppeln von Schwingungen sondern auch eine thermische und/oder elektrische Isolation geschaffen wird.

Die in den Fig. gezeigte Ausführungsform einer Lautsprecherbox 40 lässt es vorteilhafterweise auch zu, dass die Lautsprecherbox 40 auf den Gummihülsen 46 unabhängig von jeglicher Halterung auf einer ebenen Fläche (z.B. Tischplatte, Regal, Schrank) abgelegt werden kann.

Es ist ferner vorgesehen, dass das Funktionselement 40 mit dem Gerät funktional gekoppelt ist. Bezüglich der Ausführung der funktionalen Kopplung sind verschiedene Beispiele genannt. Im Bereich der Elektronik sind elektrische Anschlüsse 43 gebräuchlich (vgl. Fig. 3B). Gemäß dem gezeigten Beispiel befindet sich in der Lautsprecheröffnung 44, die hier auch als erste Öffnung 44 bezeichnet wird, ein hier nicht dargestellter Lautsprecher (erster Tonerzeuger 42), der mittels einer Lautsprecherklemmung 51 befestigt ist. Ein solcher Lautsprecher 42 weist regelmäßig elektrische Klemmen auf. Mittels des hier (in Fig. 4) nicht dargestellten elektrischen Anschlusses werden die elektrischen Klemmen des Lautsprechers über elektrische Leitungen mit weiteren Klemmen in dem Gerät 10 verbunden sein. Für eine solche Leitung ist in der Lautsprecherbox 40 eine Leitungsdurchführung 53 vorgesehen.

In der Nähe der Leitungsdurchführung 53 ist eine zweite Öffnung 45 vorgesehen, die zusätzlich zu der ersten Öffnung / Lautsprecheröffnung 44 die Tonwiedergabe der Lautsprecherbox 40 unterstützt. Mit der zweiten Öffnung 45 ist ein erstes Ende eines Kanals 52 bereitgestellt, der innerhalb des Korpus 41 angelegt ist. Ein zweites Ende des Kanals 52 befindet sind innerhalb des Korpus 41 und ist hier nicht dargestellt. Der Kanal 52 schafft eine luftdurchlässige Verbindung zwischen der zweiten Öffnung 45 (erstes Ende des Kanals) und dem Inneren der Lautsprecherbox 40 (zweites Ende des Kanals), was die Tonwiedergabe gezielt beeinflusst. Der nicht dargestellte Lautsprecher 42 (Membranlautsprecher) kann im Zuge der Tonwiedergabe einen Luftstrom erzeugen, der durch den oder in dem Kanal 52 bewegt wird. Mit anderen Worten zieht die Bewegung der Membran des Lautsprechers eine effektive Volumenänderung der Lautsprecherbox 40 nach sich, was für die Wiedergabe von Tieftönen typisch ist. Aufgrund des sich bewegenden Luftstromes können an oder in dem Kanal 52 Strömungsgeräusche auftreten. Der Kanal 52 kann so ausgeführt sein, dass dieser an seinen beiden Enden einen größeren Querschnitt als in der Mitte (zwischen den beiden Enden des Kanals) aufweist. Die beiden Enden können beispielsweise eine trichter- oder trompetenförmige Ausformung aufweisen. In der gezeigten Ausführungsform ist der Kanal 52 rechteckig, wobei die Querschnittsänderung an den Enden durch die Ausformung von zwei sich gegenüberliegender Flächen bewirkt wird. Hierzu sind diese Flächen an den beiden Enden des Kanals 52 gegensinnig gekrümmt.

Die funktionale Kopplung des Funktionselementes 40 mit dem Gerät 10 kann gemäß der bereits aufgezeigten verschiedenen Varianten eines Funktionselementes 40 unterschiedlich ausfallen. Es kommen elektrische, thermische, mechanische, hydraulische Verbindungen in Betracht, wobei auch kontaktlose Verbindungen (WLAN, IR, (Elektro-)Magnetisch) möglich sind. Es kommt bei der funktionalen Kopplung darauf an, dass mindestens ein technisches Mittel für eine funktionale Wechselwirkung zwischen dem Gerät 10 und dem Funktionselementes 40 bereitgestellt ist. Diese funktionale Wechselwirkung wird durch einen mono- oder bidirektional Daten-, Informations- oder Medienfluss bereitgestellt, was beispielsweise ein Audiosignal, ein Videosignal, ein Schaltimpuls oder ein Kühlmittelfluss sein kann. Es ist beispielsweise möglich, dass das Funktionselement 40 als Antenne oder als Empfangsgerät (Receiver; Set-Top-Box) ausgeführt ist, wobei beispielsweise ein Bildsignal (HDMI, Audio/Video) an das Gerät übertragen werden soll. Das Funktionselement 40 kann dem Gerät 10 eine Betriebsspannung oder einen Teil davon bereitstellen und als Netzteil ausgeführt sein.

In einer Ausführungsform, in der das Funktionselement 40 als Lautsprecherbox 40 ausgeführt ist, kann die Lautsprecherbox 40 für einen ersten Frequenzbereich ausgelegt sein. Ferner können in dem Gerät 10 weitere Mittel zur Tonwiedergabe wie ein zweiter Tonerzeuger 13 für einen zweiten Frequenzbereich ausgelegt sein. Der erste Frequenzbereich und der zweite Frequenzbereich können so gewählt sein, dass damit die Tonwiedergabe über den gesamten wahrnehmbaren Frequenzbereich, der zur Tonwiedergabe des Gerätes 10 bereitgestellt ist, abgedeckt ist. Es ist möglich, dass eine Überschneidung der Frequenzbereiche beabsichtigt ist.

Der erste Frequenzbereich und der zweite Frequenzbereich können derart frei gewählt werden, dass die jeweiligen Lautsprecher, Lautsprecherboxen oder die Mittel zur Tonwiedergabe für die Wiedergabe von Tief-, Mittel und/oder Hochtöne bereitgestellt sind. Es ist möglich, dass die Lautsprecherbox 40 ausschließlich für die Wiedergabe von Tieftönen (Bass, Subwoofer) ausgelegt ist. Ferner ist zumindest die anteilige Wiedergabe von Mitteltönen möglich. Beispielsweise kann die Lautsprecherbox 40 für einen Frequenzbereich (erster Frequenzbereich) von ca. 75 Hz bis ca. 200 Hz ausgelegt sein (auch von ca. 50 Hz bis ca. 250 Hz). Aus den bereits genannten Gründen (Größe, Form, Funktionsweise) ist die Lautsprecherbox 40 vorzugsweise für Wiedergabe von Tieftönen vorzusehen.

Bezüglich der funktionalen Kopplung ist vorgesehen, den ersten Frequenzbereich und den zweiten Frequenzbereich mittels einer Frequenzweiche 14 zu trennen oder zu teilen. Hierzu kann die Frequenzweiche 14 am Eingang mit dem Audiosignal versorgt werden, dass für die Tonwiedergabe insgesamt vorgesehen ist. Die Frequenzweiche 14 liefert an einem ersten Ausgang ein erstes Audiosignal für den ersten Frequenzbereich und an einem zweiten Ausgang ein zweites Audiosignal für den zweiten Frequenzbereich. Es kann vorgesehen sein, dass die funktionale Kopplung als eine elektrische Leitung oder als ein elektrischer Anschluss 43 ausgeführt ist, mittels der bzw. dem der erste Ausgang mit dem Lautsprecher 42 der Lautsprecherbox 40 verbunden oder gekoppelt ist. Die elektrische Leitung 43 ist trennbar ausgeführt und weist ggf. einen oder mehrere Steckverbinder auf. Es ist vorgesehen, dass die Frequenzweiche 14 in das Gerät 10 integriert ist. Folglich könnte an dem Gerät 10 der Steckverbinder vorgesehen sein. Es ist vorgesehen, dass der zweite Ausgang (geräteinterner Anschluss) mit dem zweiten Tonerzeuger verbunden ist. An den Eingängen, Ausgänge und Anschlüssen können z.B. Steckverbinder oder Klemmen vorgesehen sein.

In einer weiteren Ausführungsform ist der Halter 30 als ein Ständer ausgeführt, wobei der Ständer zum Aufstellen des Gerätes 10 vorgesehen ist. Die Bildfläche 16 des Gerätes 10 kann im Wesentlichen vertikal oder horizontal gestellt sein. In einer weiteren Ausgestaltung kann sich die erste Aufnahme 15 sowie der Halter 30 zumindest anteilig in oder unter dem Gehäuse 11 befinden, das z.B. über der Rückwand des Gerätes 10 angeordnet ist (Rückabdeckung). Der Ständer kann als Tischständer ausgeführt sein. Es kann sich auch um einen solchen Halter 30 handeln, der derart abgewinkelt ist, dass er wie ein Tischständer von der Unterseite des Gerätes 10 unter das Gehäuse 11 geführt und an der ersten Aufnahme 15 mit dem Distanzelement 20 sowie mittels der VESA-Verbindung befestigt ist. In dem Fall überdeckt das Gehäuse 11 die Befestigungsstruktur.

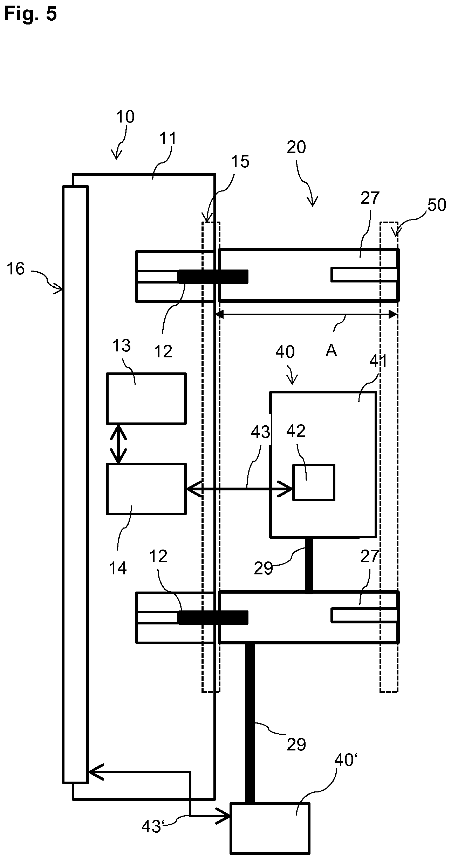

Mit der **Fig. 5** soll die Vorrichtung anhand einer schematischen Darstellung in einer vereinfachten Form gezeigt werden. Die Vorrichtung weist das Distanzelement 20 auf. Die Vorrichtung ist mithin vorgesehen, um an dem Gerät 10 befestigt zu werden. Ferner ist die Vorrichtung/das Distanzelement 20 dafür bereitgestellt, dass an dieser ein Halteelement befestigt werden kann. Hierzu weist die Vorrichtung eine zweite Aufnahme 50 auf, die aus den Innengewinden der (z.B. vier) Gewindebolzen 27 gebildet ist. Das Halteelement könnte an einer Wand montiert sein. Beispielhaft ist gezeigt, wie die Vorrichtung an einer ersten Aufnahme 15 des Gerätes 10 befestigt ist. Zum Befestigen sind die Gewindebolzen 27 in Gewindebohrungen 12 eingeschraubt. Die Gewindebohrungen 12 bilden die erste Aufnahme 15.

An der Distanzhülse 21 ist mittels einer zweiten mechanischen Kopplung 29 das Funktionselement 40 befestigt sowie ein zusätzliches Funktionselement 40'. Das Funktionselement 40 weist einen Korpus 41 sowie einen ersten Tonerzeuger 42 auf, der beispielsweise die Funktion der Tonwiedergabe des Gerätes 10 unterstützt. Zur Tonwiedergabe sind in das Gerät 10 eine Frequenzweiche 14 und ein zweiter Tonerzeuger 13 integriert. Zur Unterstützung der Tonwiedergabe ist der erste Tonerzeuger 42 über den elektrischen Anschluss 43 mit der Frequenzweiche 14 des Gerätes 10 funktional gekoppelt.

Das Gerät 10 ist ferner mit mindestens einem Mittel zur Bildwiedergabe ausgeführt und weist eine Bildfläche 16 auf. Das Mittel zur Bildwiedergabe ist über einen zusätzlichen elektrischen Anschluss 43' mit dem zusätzlichen Funktionselement 40' funktional gekoppelt. Das zusätzliche Funktionselement 40' könnte beispielsweise zur Unterstützung der Bildwiedergabe des Gerätes vorgesehen sein.

Die Vorrichtung ist derart ausgeführt, dass sich das Gerät 10 in einer Distanz zu dem Halteelement anordnen lässt. Diese Distanz ist durch einen Abstand A gebildet, der mit einem Pfeil zwischen der ersten Aufnahme 15 des Gerätes 10 und der zweiten Aufnahme 50 des Distanzelementes angedeutet ist.

Wie bereits erwähnt ist der Abstand zwischen Kontakt- oder Auflageflächen gebildet. Diese Kontakt- oder Auflageflächen können eben oder gekrümmt sein, wobei die der beiden Aufnahmen (erste Aufnahme 15, zweite Aufnahme 50) zueinander auch schräg oder parallel angelegt sein können.

### Bezugszeichenliste

- 10: Gerät
- 11: Gehäuse
- 12: Gewindebohrungen
- 13: zweiter Tonerzeuger
- 14: Frequenzweiche
- 15: erste Aufnahme
- 16: Bildfläche
- 20: Distanzelement
- 21: Distanzhülse
- 22: Bohrung
- 23: Streifen
- 24: Bohrung
- 25: Bohrung
- 26: Distanzring
- 27: Gewindebolzen
- 28: Kopfbolzen
- 29: zusätzliche mechanische Kopplung
- 30: Halteelement
- 31: Lochplatte
- 32: Bohrung
- 40: Funktionselement / Lautsprecherbox
- 41: Korpus
- 42: erster Tonerzeuger / Lautsprecher
- 43: elektrischer Anschluss
- 44: erste Öffnung / Lautsprecheröffnung
- 45: zweite Öffnung
- 46: Gummihülse
- 47: Gummistreifen
- 49: Loch
- 50: zweite Aufnahme
- 51: Lautsprecherklemmung
- 52: Kanal
- 53: Leitungsdurchführung

## Patentansprüche

1. Anordnung zum Halten eines Gerätes (10), die Anordnung aufweisend:
- das Gerät (10) mit Funktionen insbesondere zur Wiedergabe von Ton und/oder Bild;
- ein Halteelement (30) zum Koppeln und Fixieren der Lage des Gerätes an einem Ort;
- ein Distanzelement (20) zum Anordnen zwischen dem Gerät (10) und dem Halteelement (30) sowie
- ein Funktionselement (40) zum Unterstützen mindestens einer Funktion des Gerätes (10),
wobei das Gerät (10) mindestens eine erste Aufnahme (15) aufweist,
wobei das Distanzelement (20) eine zweite Aufnahme (50) aufweist,
wobei an der ersten Aufnahme (15) das Gerät (10) mit dem Distanzelement (20) und an der zweiten Aufnahme (50) das Distanzelement (20) mit dem Halteelement (30) mechanisch gekoppelt sind zum Halten des Gerätes (10) und
wobei das Funktionselement (40) mit dem Distanzelement (20) mechanisch gekoppelt ist zum Halten des Funktionselementes (40) und
wobei das Funktionselement (40) mit dem Gerät (10) funktional gekoppelt ist zum Unterstützen mindestens einer Funktion des Gerätes (10),
wobei mittels des Distanzelementes (20) zwischen der ersten Aufnahme (15) und der zweiten Aufnahme (50) ein Abstand (A) ausgebildet ist,
**dadurch gekennzeichnet, dass**
das Distanzelement (20) Distanzhülsen (21) mit einer Bohrung (22) sowie Streifen (23) mit Bohrungen (24) und (25) aufweist, wobei die Streifen (23) zwei oder vier Teilen aufweisen.

2. Anordnung gemäß Anspruch 1,
wobei das Distanzelement (20) derart ausgeführt und gekoppelt ist, dass es die Kraft zum Halten des Gerätes (10) zwischen dem Gerät (10) und dem Halteelement (30) überträgt, wobei das Distanzelement (20) derart ausgeführt ist, dass das Gerät (10) in einer Distanz zum Halteelement (30) angeordnet ist,
wobei das Distanzelement (20) einen Innenraum aufweist und/oder ausbildet, in dem das Funktionselement (40) vollständig oder zumindest anteilig angeordnet ist.

3. Anordnung gemäß Anspruch 1 oder 2,
wobei das Funktionselement (40) zur Wiedergabe von Ton ausgebildet ist,
wobei das Funktionselement (40) einen Korpus (41), mindestens einen ersten Tonerzeuger (42) sowie einen elektrischen Anschluss (43) zum Versorgen des ersten Tonerzeugers (42) aufweist und
wobei der Korpus (41) mindestens eine Öffnung (44, 45) zum Abgeben des Tones aufweist.

4. Anordnung gemäß Anspruch 3,
wobei der Korpus (41) und/oder der erste Tonerzeuger (42) zur Wiedergabe von Ton mit einer Tonfrequenz, die in einem ersten Frequenzbereich liegt, ausgelegt sind/ist und wobei der elektrische Anschluss (43) zum Versorgen des ersten Tonerzeugers mit dem Gerät (10) funktional gekoppelt ist.

5. Anordnung gemäß einem der Ansprüche 1 bis 4,
wobei das Gerät (10) mindestens einen zweiten Tonerzeuger (13) aufweist, der zur Wiedergabe von Ton mit einer Tonfrequenz, die in einem zweiten Frequenzbereich liegt, ausgelegt ist.

6. Anordnung gemäß einem der Ansprüche 3 bis 5,
wobei das Gerät (10) mindestens eine Frequenzweiche (14) aufweist, die an einem ersten Ausgang zum Bereitstellen eines ersten Audiosignals zum Erzeugen von Ton aus einem ersten Frequenzbereich und die an einem zweiten Ausgang zum Bereitstellen eines zweiten Audiosignals zum Erzeugen von Ton aus einem zweiten Frequenzbereich eingerichtet ist und wobei der erste Tonerzeuger (42) zur Wiedergabe von Ton mit einer Tonfrequenz, die in einem ersten Frequenzbereich liegt, über den elektrischen Anschluss (43) mit dem ersten Ausgang und der zweite Tonerzeuger (13) zur Wiedergabe von Ton mit einer Tonfrequenz, die in einem zweiten Frequenzbereich liegt, mit dem zweiten Ausgang gekoppelt ist.

7. Anordnung gemäß einem der Ansprüche 1 bis 6,
wobei die Anordnung mindestens zwei Befestigungsstrukturen zum mechanischen Koppeln aufweist,
wobei eine Befestigungsstruktur mehrere Befestigungsverbindungen (12, 25, 21, 22, 32) aufweist und gemäß der Lage- und Abstandsbeziehung der Befestigungsverbindungen die Befestigungsstruktur in einem Befestigungsformat von mehreren Befestigungsformaten ausgeführt ist,
wobei das Gerät (10), das Distanzelement (20) und das Halteelement (30) jeweils eine erste Befestigungsstruktur aufweisen und mittels derer miteinander mechanisch gekoppelt sind, wobei die jeweilige erste Befestigungsstruktur in einem ersten Befestigungsformat ausgeführt ist.

8. Anordnung gemäß Anspruch 7,
wobei das Funktionselement (40) und das Distanzelement (20) jeweils eine zweite Befestigungsstruktur aufweisen und mittels derer miteinander gekoppelt sind,
wobei die jeweilige zweite Befestigungsstruktur entweder in dem ersten Befestigungsformat ausgeführt ist oder in einem zweiten Befestigungsformat, das ungleich dem ersten Befestigungsformat ist, ausgeführt ist.

## Claims

1. Arrangement for holding a device (10), the arrangement comprising:
- the device (10) having functions, in particular for reproducing sound and/or image;
- a holding element (30) for coupling and fixing the position of the device at a location;
- a distance element (20) for arranging between the device (10) and the holding element (30); and
- a functional element (40) for supporting at least one function of the device (10),
wherein the device (10) has at least a first reception (15),
wherein the distance element (20) has a second reception (50),
wherein, at the first reception (15), the device (10) is mechanically coupled to the distance element (20), and at the second reception (50), the distance element (20) is mechanically coupled to the holding element (30) for holding the device (10), and
wherein the functional element (40) is mechanically coupled to the distance element (20) for holding the functional element (40), and
wherein the functional element (40) is functionally coupled to the device (10) for supporting at least one function of the device (10),
wherein, by means of the distance element (20), a space (A) is formed between the first reception (15) and the second reception (50),
**characterized in that**
the distance element (20) comprises distance sleeves (21) having a bore (22) and strips (23) having bores (24) and (25), the strips (23) having two or four parts.

2. Arrangement according to claim 1,
wherein the distance element (20) is configured and coupled to transmit the force for holding the device (10) between the device (10) and the holding element (30), the distance element (20) being configured such that the device (10) is located at a distance from the holding element (30),
wherein the distance element (20) has and/or forms an interior space in which the functional element (40) is arranged completely or at least partially.

3. Arrangement according to claim 1 or 2,
wherein the functional element (40) is configured to reproduce sound,
wherein the functional element (40) comprises a body (41), at least a first sound generator (42), and an electrical connection (43) for supplying the first sound generator (42), and
wherein the body (41) comprises at least one opening (44, 45) for emitting the sound.

4. Arrangement according to claim 3,
wherein the body (41) and/or the first sound generator (42) is/are adapted to reproduce sound having a sound frequency lying in a first frequency range, and wherein the electrical connection (43) for supplying the first sound generator is functionally coupled to the device (10).

5. Arrangement according to any one of claims 1 to 4,
wherein the device (10) comprises at least a second sound generator (13) adapted to reproduce sound having a sound frequency lying in a second frequency range.

6. Arrangement according to any one of claims 3 to 5,
wherein the device (10) comprises at least a crossover (14) arranged at a first output to provide a first audio signal for generating sound from a first frequency range and configured at a second output to provide a second audio signal for generating sound from a second frequency range, and wherein the first sound generator (42) for reproducing sound having a sound frequency lying in a first frequency range, is coupled via the electrical connection (43) to the first output and the second sound generator (13) for reproducing sound having a sound frequency lying in a second frequency range is coupled to the second output.

7. Arrangement according to any one of claims 1 to 6,
wherein the arrangement comprises at least two fastening structures for mechanical coupling,
wherein a fastening structure comprises several fastening connections (12, 25, 21, 22, 32) and according to the positional and spacing relationship of the fastening connections, the fastening structure is arranged in a fastening format of several fastening formats,
wherein the device (10), the distance element (20) and the holding element (30) each comprise a first fastening structure and are mechanically coupled to one another thereby, wherein the respective first fastening structure is configured in a first fastening format.

8. Arrangement according to claim 7,
wherein the functional element (40) and the distance element (20) each have a second fastening structure and are coupled to one another thereby,
wherein the respective second fastening structure is either configured in the first fastening format or in a second fastening format different from the first fastening format.

## Revendications

1. Un agencement pour tenir un dispositif (10), l'agencement comprenant :
- le dispositif (10) présentant des fonctions, notamment de reproduction de son et/ou d'image ;
- un élément de maintien (30) pour accoupler et fixer la position du dispositif à un endroit donné ;
- un élément de distance (20) à disposer entre le dispositif (10) et l'élément de maintien (30) ; et
- un élément fonctionnel (40) pour soutenir au moins une fonction du dispositif (10),
dans lequel le dispositif (10) comporte au moins une premier réception (15),
dans lequel l'élément de distance (20) comporte une deuxième réception (50),
dans lequel, au niveau de la première réception (15), le dispositif (10) est couplé mécaniquement à l'élément de distance (20) et, au niveau de la deuxième réception (50), l'élément de distance (20) est couplé mécaniquement à l'élément de maintien (30) pour maintenir le dispositif (10), et
dans lequel l'élément fonctionnel (40) est couplé mécaniquement à l'élément de distance (20) pour maintenir l'élément fonctionnel (40), et
dans lequel l'élément fonctionnel (40) est couplé fonctionnellement au dispositif (10) pour supporter au moins une fonction du dispositif (10),
dans lequel, moyennant l'élément de distance (20), une distance (A) est formée entre la première réception (15) et la deuxième réception (50),
**caractérisé en ce que**
l'élément de distance (20) comprend des manchons d'espacement (21) avec un alésage (22) et des bandes (23) avec des alésages (24) et (25), les bandes (23) comprenant deux ou quatre parties.

2. Agencement selon la revendication 1,
dans lequel l'élément de distance (20) est configuré et couplé pour transmettre la force pour maintenir le dispositif (10) entre le dispositif (10) et l'élément de maintien (30), dans lequel l'élément de distance (20) est configuré de telle sorte que le dispositif (10) est situé à une distance de l'élément de maintien (30),
dans lequel l'élément de distance (20) présente et/ou forme un espace intérieur dans lequel l'élément fonctionnel (40) est disposé complètement ou au moins partiellement.

3. Agencement selon la revendication 1 ou 2,
dans lequel l'élément fonctionnel (40) est adapté pour reproduire du son,
dans lequel l'élément fonctionnel (40) comprend un corps (41), au moins un premier générateur de son (42), et une connexion électrique (43) pour alimenter le premier générateur de son (42), et
dans lequel le corps (41) comprend au moins une ouverture (44, 45) pour émettre le son.

4. Agencement selon la revendication 3,
dans lequel le corps (41) et/ou le premier générateur de son (42) est/sont adapté(s) pour reproduire du son ayant une fréquence sonore située dans une première gamme de fréquences, et dans lequel la connexion électrique (43) pour alimenter le premier générateur de son est couplée fonctionnellement au dispositif (10).

5. Agencement selon l'une quelconque des revendications 1 à 4,
dans lequel le dispositif (10) comprend au moins un deuxième générateur de son (13) adapté pour reproduire du son à une fréquence sonore située dans une seconde gamme de fréquences.

6. Agencement selon l'une quelconque des revendications 3 à 5,
dans lequel le dispositif (10) comprend au moins un filtre (14) disposé sur une première sortie pour fournir un premier signal audio pour générer du son à partir d'une première gamme de fréquences et disposé sur une deuxième sortie pour fournir un deuxième signal audio pour générer du son à partir d'une deuxième gamme de fréquences, et dans lequel le premier générateur de son (42) pour reproduire du son ayant une fréquence sonore située dans une première gamme de fréquences est couplé à la première sortie via la connexion électrique (43), et le deuxième générateur de son (13) pour reproduire du son ayant une fréquence sonore située dans une deuxième gamme de fréquences est couplé à la deuxième sortie.

7. Agencement selon l'une quelconque des revendications 1 à 6,
dans lequel l'agencement comprend au moins deux structures de fixation pour l'accouplement mécanique,
dans lequel une structure de fixation comprend plusieurs connexions de fixation (12, 25, 21, 22, 32) et, selon la relation de position et d'espacement des connexions de fixation, la structure de fixation est disposée dans un format de fixation de plusieurs formats de fixation,
dans lequel le dispositif (10), l'élément de distance (20) et l'élément de maintien (30) présentent chacun une première structure de fixation et moyennant laquelle sont couplés mécaniquement entre eux, dans lequel la première structure de fixation respective est configurée dans un premier format de fixation.

8. Agencement selon la revendication 7,
dans lequel l'élément fonctionnel (40) et l'élément de distance (20) présentent chacun une deuxième structure de fixation au moyen de laquelle ils sont couplés entre eux,
dans lequel la deuxième structure de fixation respective est conçue soit dans le premier format de fixation, soit dans un deuxième format de fixation différent du premier format de fixation.
